Europäisches Patentamt

European Patent Office

Office européen des brevets

(11) Numéro de publication: **0 102 125**
**A2**

(12) **DEMANDE DE BREVET EUROPEEN**

(21) Numéro de dépôt: **83201220.7**

(22) Date de dépôt: **24.08.83**

(51) Int. Cl.³: **A 47 J 31/06**

(30) Priorité: **25.08.82 BE 2059808**

(43) Date de publication de la demande:
**07.03.84 Bulletin 84/10**

(84) Etats contractants désignés:
**AT CH DE FR GB IT LI LU NL SE**

(71) Demandeur: **FABRIQUE NATIONALE HERSTAL en abrégé FN Société Anonyme**

**B-4400 Herstal(BE)**

(72) Inventeur: **Guerin, Alfred Jean Dieudonné
Dynastiestraat 5
B-2959 Elewijt(BE)**

(74) Mandataire: **Bockstael, Daniel
M.F.J. Bockstael Arenbergstraat 13
B-2000 Anvers(BE)**

(54) **Cuiller à café pour machines type espresso.**

(57) Cuiller à café pour machines du type espresso, du type constitué par un manche se terminant par un cuilleron à paroi cylindrique et fond perforé, caractérisée en ce que ledit fond est axialement mobile par rapport à ladite paroi cylindrique, sur une partie au moins de la hauteur de celle-ci.

Fig. 1

EP 0 102 125 A2

"Cuiller à café pour machines type espresso"

La présente invention concerne une cuiller à café pour machines type espresso.

Dans les machines de ce type, équipées d'une ou plusieurs cuillers amovibles, chaque cuiller est destinée à recevoir une dose de café pour être ensuite introduite dans un circuit d'eau chaude sous pression. Après extraction du café, la cuiller doit être séparée de la machine pour être vidée du marc qu'elle contient, afin d'être prête pour un cycle suivant.

Cette opération de vidage est fastidieuse vu que le marc, suite à la pression de l'eau d'extraction, est relativement compact et adhère fortement à la paroi de la cuiller, d'autant plus qu'une partie de celle-ci, formant le fond de la cuiller, est perforée.

Le but de l'invention est d'éliminer cet inconvénient.

A cet effet, une cuiller selon l'invention, du type à paroi cylindrique et à fond perforé, se distingue en ce que ledit fond est axialement mobile par rapport à ladite paroi cylindrique, sur une partie au moins de la hauteur de celle-ci.

De préférence, ledit fond axialement mobile est pourvu d'une queue centrale faisant saillie vers l'extérieur de ladite paroi cylindrique lorsque ledit fond est situé en l'extrémité normalement basse de cette dernière.

La cuiller selon l'invention comportera avantageusement un levier de manoeuvre pivoté sur une partie fonctionnellement solidaire dudit manche et permettant une action sur ladite queue centrale afin de déplacer axialement ledit fond mobile.

Le maximum de commodité sera obtenu en utilisant du café torréfié et moulu conditionné en forme de pastilles, c'est-à-dire une dose de café enfermée dans une enveloppe (mixte ou non) constituée d'un ou plusieurs matériaux (papier, complexe, plastique) rigide ou souple, troué ou non, perméable ou imperméable en tout ou en partie, de forme quelconque dont notamment parallélipipédique, conique, cylindrique, ovoïde, etc..., cette enveloppe se bloquant dans le cuilleron.

Un exemple de réalisation de l'invention est décrit ci-après à titre illustratif et non restrictif, référence étant faite aux dessins annexés, dans lesquels :

la figure 1 est une vue en élévation d'une cuiller selon l'invention;

la figure 2 est une vue en plan de la même cuiller; et

la figure 3 est une coupe selon la trace III-III de la figure 1.

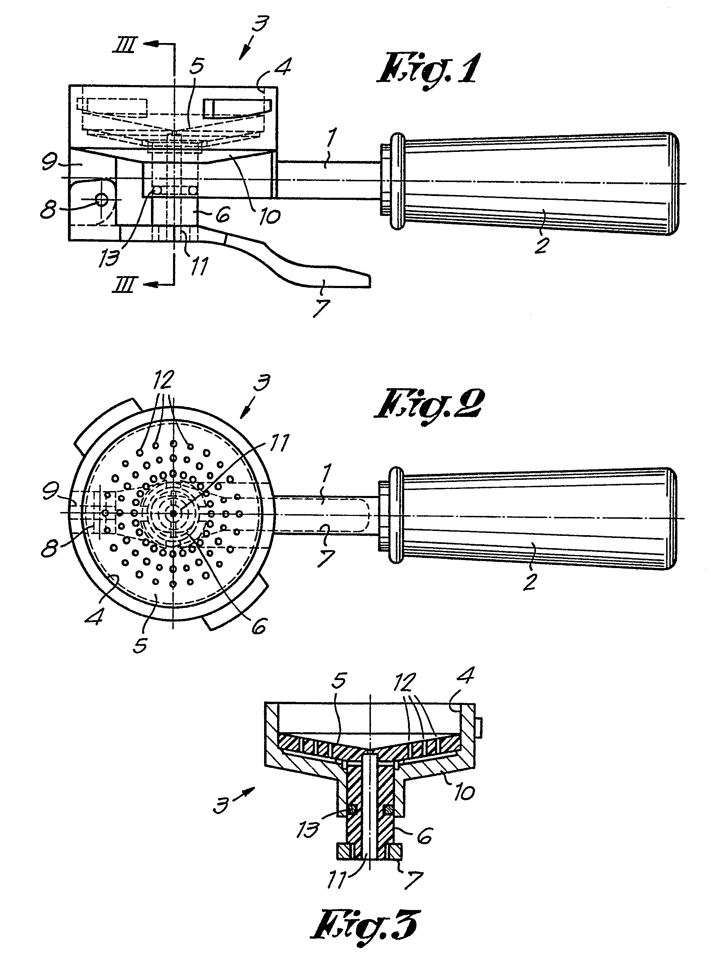

De façon traditionnelle, la cuiller selon l'invention consiste en un manche 1 à poignée 2, manche portant un cuilleron 3 constitué par une paroi cylindrique 4 et un fond conique ou concave 5 perforé.

Conformément à l'invention, ce fond 5 est distinct de ladite paroi 4 et est axialement mobile par rapport à cette dernière.

Il est muni d'une queue 6 engagée par un levier 7 pivoté en 8 sur une partie 9 solidaire du manche 1.

Dans l'exemple illustré, le cuilleron 3 comporte également un fond fixe 10, dont le fond mobile 5 est séparé d'une faible distance lorsque le levier 7 n'est pas sollicité. La queue 6 est pourvue d'un passage axial borgne 11 communiquant avec l'espace séparant les fonds mobile et fixe, respectivement 5 et 10, permettant l'écoulement de l'eau d'extraction provenant des perforations 12 dudit fond mobile 5.

Un joint torique 13 s'oppose au passage de l'extrait autour de ladite queue 6.

Il est clair qu'un déplacement angulaire du levier 7, autour de son pivotement autour de l'axe 8, vers le manche 1 entraîne un soulèvement du fond perforé 5 par rapport au fond fixe 10 et, dès lors, une éjection du contenu du cuilleron 3.

La cuiller susdécrite peut être utilisée de façon conventionnelle, avec du café moulu "en vrac". Toutefois, la préférence sera donnée à l'utilisation de café conditionné en pastilles, c'est-à-dire des doses de café emprisonnées dans une enveloppe (mixte ou non) constituée d'un ou plusieurs matériaux (papier, complexe, plastique) rigide ou souple, troué ou non, perméable ou imperméable en tout ou en partie, de forme quelconque dont notamment parallélipipédique, conique, cylindrique, ovoïde, etc..., cette enveloppe se bloquant dans le cuilleron.

Il est évident que de nombreuses modifications peuvent être apportées à l'exemple susdécrit, sans pour autant sortir du cadre de l'invention.

Revendications.

1.- Cuiller à café pour machines du type espresso, du type constitué par un manche 1 se terminant par un cuilleron 3 à paroi cylindrique 4 et fond perforé 5, caractérisée en ce que ledit fond 5 est axialement mobile par rapport à ladite paroi cylindrique 4 sur une partie au moins de la hauteur de celle-ci.

2.- Cuiller à café selon la revendication 1, caractérisée en ce que ledit fond 5 axialement mobile est pourvu d'une queue centrale 6 faisant saillie vers l'extérieur de ladite paroi cylindrique 4 lorsque ledit fond 5 est situé en l'extrémité normalement basse de cette dernière.

3.- Cuiller à café selon la revendication 2, caractérisée en ce qu'elle comporte un levier de manoeuvre 7 pivoté sur une partie fonctionnellement solidaire dudit manche 1 et permettant une action sur ladite queue centrale 6 afin de déplacer axialement ledit fond mobile 5.

4.- Cuiller à café selon la revendication 1, caractérisée en ce que ledit cuilleron 3 est pourvu d'un fond fixe 10, ledit fond mobile perforé 5 étant situé à faible distance de ce dernier lorsque ledit levier de manoeuvre 7 est au repos, ledit fond mobile 5 étant pourvu d'une queue à alésage axial borgne 11, pourvue d'une communication au moins avec l'espace séparant les deux fonds, queue sur laquelle agit ledit levier 7.

0102125

Fig.1

Fig.2

Fig.3